# EUROPEAN PATENT SPECIFICATION

(11) **EP 4 217 145 B1**
(45) Date of publication and mention of the grant of the patent: **27.05.2026**
(21) Application number: 21782507.4
(22) Date of filing: 21.09.2021
(51) Int. Cl.: B23Q 1/01, B23Q 1/62, B23Q 3/157, B23Q 39/04

(54) **MULTI-AXIS MACHINING CENTER PROVIDED WITH MECHANIZED TOOL MAGAZINE**
MEHRACHSIGES BEARBEITUNGSZENTRUM MIT MECHANISIERTEM WERKZEUGMAGAZIN
CENTRE D'USINAGE MULTI-AXES DOTÉ D'UN MAGASIN D'OUTILS MÉCANISÉ

(30) Priority: 24.09.2020 IT 202000022525
(43) Date of publication of application: 02.08.2023
(73) Proprietor: Vigel S.p.A., 10071 Borgaro Torinese (IT)
(72) Inventor: FRANCESIA VILLA, Daniele, 10070 Mezzenile (IT); STABIO, Diego, 10076 Nole (IT)
(74) Representative: Modiano, Micaela Nadia
(86) International application number: PCT/EP2021/075942
(87) International publication number: WO 2022/063777

(56) References cited:
- EP-A1- 3 002 080
- EP-A2- 1 240 974
- WO-A1-97/41997
- WO-A2-2009/093877
- DE-A1- 10 157 404
- DE-A1- 102017 105 933

## Description

The present invention relates to a multi-axis machining center provided with mechanized tool magazine.

As known, a multi-axis machining center may comprise generally a motorized tool holding spindle mounted on a machining head which can move along two or more axes, with respect to the workpiece to be machined, so as to subject the workpiece to different successive machining processes such as milling, boring, tapping, and the like.

The spindle may have its axis arranged horizontally or vertically. Such a machining center is known from EP 1 240 974 A2.

It is also known to provide machining centers of the above cited type with a mechanized tool magazine, from which the spindle automatically picks up the tools to be used in the various machining steps by utilizing the mobility in space of the machining head.

A tool magazine of the known type, particularly appreciated for its reliability, comprises a motorized tool holding drum. In the case of a spindle with horizontal axis, the tool holding drum can be arranged so as to face the spindle with its horizontal axis and at right angles to the axis of the spindle, so as to present to said spindle the tools to be picked up.

In order to increase productivity, the machining center may be also provided with multiple parallel spindles mounted on a single machining head, so as to machine multiple workpieces simultaneously.

Although machining centers of the above cited type are highly appreciated both for their machining precision and for their productivity - since they are able to perform several machining operations on the workpiece with a single positioning - they have, however, the limitation of being suitable mostly for the machining of small- to medium-sized workpieces, for example mechanical parts in the automotive sector or in the industrial sector.

Larger workpieces, such as portions of the chassis or body of a vehicle, currently can be subjected to successive machining processes on different machine tools, with a consequent drastic reduction in both productivity and machining precision, since the workpiece must be repositioned each time it is transferred from one machine tool to the next.

So-called multitasking machines are known which are capable of performing different machining processes on large workpieces, but they too are limited in terms of productivity since they are provided with a single spindle which can move with respect to multiple axes, for example five axes.

In addition, known multitasking machines, despite using a single spindle, are extremely bulky and therefore difficult to place inside the production facility.

The aim of the present invention is to provide a multi-axis machining center with mechanized tool magazine that is capable of machining large workpieces, such as portions of the chassis or body of vehicles, while having substantially the same machining versatility and the same dimensions as machining centers intended for machining small- to medium-sized workpieces.

Within this aim, an object of the present invention is to provide a multi-axis machining center that has a much greater productivity than currently known multitasking machines for machining large workpieces.

This aim and this and other objects which will become better apparent from the description that follows are achieved by the machining center having the characteristics described in claim 1, while the dependent claims define other advantageous, albeit secondary, characteristics of the invention.

The invention is now described in greater detail with reference to some of its preferred but not exclusive embodiments, illustrated by way of non-limiting example in the accompanying drawings, wherein:
Figure 1 is a schematic plan view of a machining center according to the invention;
Figure 2 is a schematic lateral elevation view of the machining center of Figure 1.

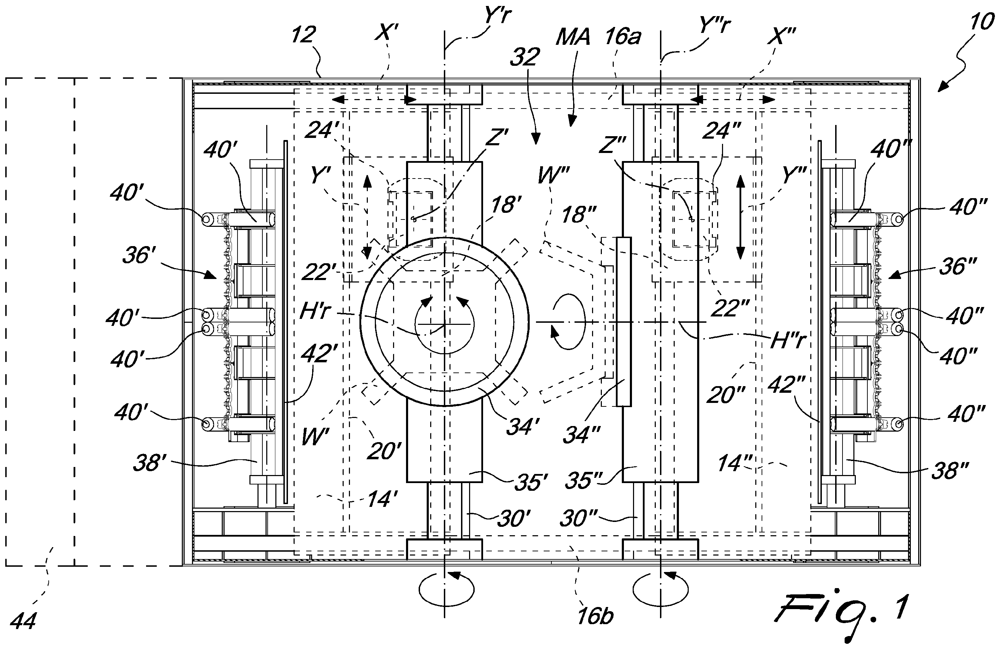

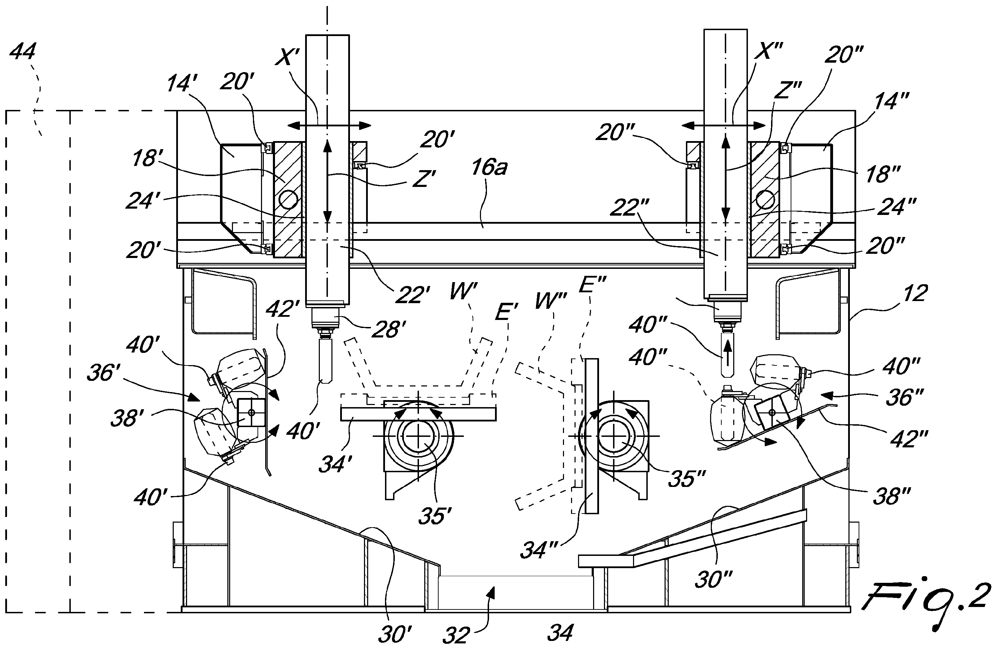

With reference to Figures 1 and 2, a machining center 10 according to the invention comprises a supporting structure 12, which in the schematic embodiment shown has a box-like profile, in which a work area MA is defined.

Two independent carriages 14', 14" are slidingly supported by a pair of parallel horizontal rails 16a, 16b fixed in an elevated position, preferably at the upper end, of the supporting structure 12 and extended in a longitudinal direction.

Therefore, each one of the two carriages 14', 14" can slide along a respective longitudinal translation axis X', X".

Each one of the two carriages 14', 14" supports a respective slider 18', 18", which can slide along a respective horizontal guide 20', 20" which is integral with the carriage 14', 14" and is extended along a respective transverse translation axis Y', Y".

Each one of the sliders 18', 18" supports a respective machining head 22', 22", which is in turn supported slidingly on a respective vertical guide 24', 24" which is integral with the slider 18', 18" and is extended along a respective vertical translation axis Z', Z".

In particular, the machining head 22', 22" supports, at its lower end, a spindle 28', 28" arranged so that its axis is vertical.

The spindle 28', 28" can mount different type of tools for machining processes such as milling, boring, tapping and the like.

According to a preferred embodiment of the invention, the supporting structure 12 has a base which comprises at least one chute which leads into a chip discharge area, advantageously two longitudinally mutually opposite chutes 30', 30" which lead into a central chip discharge area 32.

The base 30', 30" supports at least one workpiece holding table, advantageously two workpiece holding tables 34', 34" in mirror longitudinal positions, preferably arranged along the centerline axis of the machining center 10.

Each one of the workpiece holding tables 34', 34" is supported by a rotating workpiece holding drum 35', 35" the horizontal axis Yr', Yr" of which extends in a horizontal and transverse direction. Furthermore, the workpiece holding table 34', 34" is supported by the respective workpiece holding drum 35', 35" so that it can rotate about an axis of rotation Hr', Hr" of its own, which is at right angles to the axis of rotation of the workpiece holding drum 35', 35".

In a per se known manner, two workpieces W', W" being processed can be fixed to the respective workpiece holding tables 34', 34" by means of respective workpiece holding fixtures E', E".

The machining center 10 is provided with two mechanized tool magazines 36', 36" arranged at the opposite longitudinal ends of the supporting structure 12 so as to be accessible by the two spindles 28', 28" respectively.

In this embodiment, each one of the two tool magazines 36', 36" comprises a rotating tool holding drum 38', 38" which supports peripherally a plurality of tools 40', 40". The rotating tool holding drums 38', 38" are arranged so that their axes are horizontal and parallel to the transverse translation axes Y', Y". In each of the tool magazines 36', 36", the tools 40', 40" are arranged on two angularly spaced rows of the respective tool holding drum 38', 38", said rows extending parallel to the axis of the respective tool holding drum 38', 38".

The spindles 28', 28" pick up automatically the tools 40', 40" to be used in the various machining steps from the respective mechanized tool magazines 36', 36", utilizing the mobility in space of the respective machining heads 22', 22". Depending on where the tool is arranged on the tool holding drum 38', 38", said drum is rotated so as to present the tools of one row or the other to the respective spindle 28', 28".

Advantageously, each one of the tool magazines 36', 36" is provided with a shield 42', 42" which, in this embodiment, is fixed to the respective tool holding drum 38', 38". During machining, the tool holding drum 38', 38" is rotated so as to direct the respective shield 42', 42" toward the work area MA, so as to hide the respective tool magazine 36', 36" and protect it from the machining chips.

In an alternative embodiment, the shields might be movable independently of the respective drums.

Of course, all of the above described movable components of the machining center are motorized by means of actuation systems of the conventional type, for example electric actuators, hydraulic actuators and/or pneumatic actuators, which are subjected to a control unit (not shown), in a manner that is per se conventional in the field.

A hydraulic/electric control unit 44 (shown only schematically with the dashed line in the figures) is arranged selectively at one of the two longitudinal ends of the supporting structure 12, in a spaced position so as to form an operator passage for access to the tool magazine.

Naturally, the supporting structure 12 can be provided with inspection doors or windows (not shown) on one or more sides, in a manner that is per se conventional in the field.

In operation, the workpieces W', W" are fixed on the respective workpiece holding tables 34', 34" by means of the respective fixtures E', E".

Since the carriages 14', 14" share the same rails 16a, 16b, each one of the workpieces can be machined simultaneously by both spindles 28', 28", or the spindles 28', 28", being completely independent, can work on respective workpieces, with much greater versatility than known solutions.

During machining, the shields 42', 42" protect the tool magazines 36', 36" from the machining chip, which therefore falls in the chip collection area 32 by means of the chutes 30', 30".

The spindles 28', 28" can move along the three Cartesian axes. Two additional degrees of freedom are provided by the rotation of the workpiece holding tables 34', 34" about their own axis and about the axis of the respective workpiece holding drum, so that any workpiece, with a single placement, can be machined substantially in any direction and on any side directed toward the work area MA.

As the person skilled in the art may appreciate, one advantage of the invention is that the two carriages 14', 14" share the same rails 16a, 16b for translation in a longitudinal direction. In this manner, each one of the two spindles 28', 28" can "trespass", in a longitudinal direction, onto the half of the work area that is occupied by the other spindle, thus offering high versatility.

Some preferred embodiments of the invention have been described, but the person skilled in the art may of course apply various modifications and variations within the scope of the claims.

For example, each one of the carriages might support two sliders, and each one of the sliders in turn might support two or more spindles for machining simultaneously multiple relatively small workpieces mounted on the workpiece holding tables. In fact, although the machining center described and illustrated herein has been conceived for the machining of large workpieces, such as chassis or body parts in the automotive, aviation, nautical industry and the like, it has been found in practice that the same principles can be applied to machining centers for machining small- to medium-sized workpieces, obtaining numerous advantages.

The guiding means that allow the translation or rotation of the various movable elements of the machining center may be provided by means of technologies commonly used in the industry, which are well known to the person skilled in the art, such as rotating supports or sliding supports using rolling bearings, low-friction sliders, and the like.

Although tool magazines of the type described above are particularly appreciated for their reliability, one or both of the tool magazines might of course be of a different type, for example, chain-based tool magazines.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A machining center, comprising a supporting structure (12) and two independent carriages (14', 14") both supported so that they can slide along respective longitudinal translation axes (X', X") by a pair of parallel horizontal rails (16a, 16b) which extend along a longitudinal direction and are fixed in a raised position to the supporting structure (12), each one of said carriages (14', 14") supporting a respective machining head (22', 22") which can move along a respective transverse translation axis (Y', Y") and along a respective vertical translation axis (Z', Z") by means of respective guiding means (18', 18", 20', 20", 24', 24"), each one of said machining heads (22', 22") supporting a respective tool holding spindle (28', 28") arranged with a vertical axis, said machining center (10) further comprising at least one workpiece holding table (34', 34") supported at a base (30', 30") of said supporting structure (12) in a rotatable manner about a first rotation axis (Yr', Yr") which extends in a horizontal and transverse direction, and about a second rotation axis (Hr', Hr"), which is perpendicular to the first one, and two mechanized tool magazines (36', 36") supported at the opposite longitudinal ends of said supporting structure (12) in order to be accessible by each one of said spindles (28', 28"), said guiding means comprising, for each one of said carriages (14, 14"), a slider (18', 18") which can slide along a respective horizontal guide (20', 20") which is integral with the carriage (14', 14") and extends in a transverse direction, and, for each one of said sliders (18', 18"), a vertical guide (24', 24") which is integral with the slider (18', 18") and is engaged slidingly by a respective one of the machining heads (22', 22"), each of said tool magazines (36', 36") comprising a rotating tool holding drum (38', 38") which is arranged so that its axis is horizontal and transverse and supports peripherally a plurality of tools (40', 40").

2. The machining center (10) according to claim 1, **characterized in that** it comprises two of said workpiece holding tables (34', 34") in mirror longitudinal positions.

3. The machining center (10) according to claim 1 or 2, **characterized in that** said at least one workpiece holding table (34', 34") is arranged along the centerline axis of said machining center (10).

4. The machining center (10) according to one or more of claims 1-3, **characterized in that** said supporting structure (12) has a base which comprises at least one chute (30', 30") which leads into a chip discharge area (32).

5. The machining center (10) according to claim 4, **characterized in that** said base comprises two longitudinally mutually opposite chutes (30', 30") which lead into a central chip discharge area (32).

6. The machining center (10) according to claim 1, **characterized in that** each one of said tool magazines (36', 36") is provided with a shield (42', 42") that is adapted to shelter, during machining, the respective tool magazine (36', 36") from the machining chips.

7. The machining center (10) according to claim 6, **characterized in that** said shield (42', 42") is fixed to the respective tool holding drum (38', 38").

## Patentansprüche

1. Ein Bearbeitungszentrum, das eine tragende Struktur (12) und zwei unabhängige Schlitten (14', 14") umfasst, die beide auf einem Paar paralleler horizontaler Schienen (16a, 16b), die sich entlang einer Längsrichtung erstrecken und in einer erhöhten Position an der tragenden Struktur (12) befestigt sind, so gelagert sind, dass sie entlang entsprechenden Längsachsen (X', X") gleiten können; wobei jeder der Schlitten (14', 14") einen jeweiligen Bearbeitungskopf (22', 22") trägt, welcher sich mit Hilfe entsprechender Führungsmittel (18', 18", 20', 20", 24', 24") entlang einer entsprechenden transversalen Translationsachse (Y', Y") und entlang einer entsprechenden vertikalen Translationsachse (Z', Z") bewegen kann; wobei jeder der Bearbeitungsköpfe (22', 22") eine entsprechende Werkzeughaltespindel (28', 28") trägt, die mit einer vertikalen Achse angeordnet ist; wobei das Bearbeitungszentrum (10) weiter mindestens einen Werkstückhaltetisch (34', 34") umfasst, der drehbar um eine erste Rotationsachse (Yr', Yr"), welche sich in einer horizontalen und transversalen Richtung erstreckt, und um eine zweite Rotationsachse (Hr', Hr"), die senkrecht zu der ersten ist, an einer Basis (30', 30") der tragenden Struktur (12) gelagert ist; und zwei mechanisierte Werkzeugmagazine (36', 36"), die an den gegenüberliegenden Längsenden der tragenden Struktur (12) gelagert sind, um für jede der Spindeln (28', 28") zugänglich zu sein; wobei die Führungsmittel für jeden der Schlitten (14, 14") einen Schieber (18', 18") umfassen, der entlang einer jeweiligen horizontalen Führung (20', 20") gleiten kann, welche integral mit dem Schlitten (14', 14") ist und sich in einer transversalen Richtung erstreckt, und, für jeden der Schieber (18', 18"), eine vertikale Führung (24', 24"), die integral mit dem Schieber (18', 18") ist und in gleitendem Eingriff mit einem entsprechenden der Bearbeitungsköpfe (22', 22") steht; wobei jedes der Werkzeugmagazine (36', 36") eine Rotationswerkzeughaltetrommel (38', 38") umfasst, die so angeordnet ist, dass ihre Achse horizontal und transversal ist und peripher eine Vielzahl von Werkzeugen (40', 40") trägt.

2. Das Bearbeitungszentrum (10) gemäß Anspruch 1, **dadurch gekennzeichnet, dass** es zwei der Werkstückhaltetische (34', 34") in spiegelbildlichen Längspositionen umfasst.

3. Das Bearbeitungszentrum (10) gemäß Anspruch 1 oder 2, **dadurch gekennzeichnet, dass** der mindestens eine Werkstückhaltetisch (34', 34") entlang der zentralen Achse des Bearbeitungszentrums (10) angeordnet ist.

4. Das Bearbeitungszentrum (10) gemäß einem oder mehreren der Ansprüche 1-3, **dadurch gekennzeichnet, dass** die tragende Struktur (12) eine Basis hat, welche mindestens eine Rutsche (30', 30") umfasst, die in einen Spanabladebereich (32) führt.

5. Das Bearbeitungszentrum (10) gemäß Anspruch 4, **dadurch gekennzeichnet, dass** die Basis zwei einander in Längsrichtung gegenüberliegende Rutschen (30', 30") umfasst, die in einen zentralen Spanabladebereich (32) führen.

6. Das Bearbeitungszentrum (10) gemäß Anspruch 1, **dadurch gekennzeichnet, dass** jedes der Werkzeugmagazine (36', 36") mit einer Abschirmung (42', 42") versehen ist, die ausgebildet ist, um während der Bearbeitung das jeweilige Werkzeugmagazin (36', 36") vor den Bearbeitungsspänen zu schützen.

7. Das Bearbeitungszentrum (10) gemäß Anspruch 6, **dadurch gekennzeichnet, dass** die Abschirmung (42', 42") an der jeweiligen Werkzeughaltetrommel (38', 38") befestigt ist.

## Revendications

1. Centre d'usinage comprenant une structure de support (12) et deux chariots indépendants (14', 14") tous deux supportés de manière à pouvoir coulisser le long d'axes de translation longitudinaux respectifs (X', X") par une paire de rails horizontaux parallèles (16a, 16b) qui s'étendent dans une direction longitudinale et sont fixés en position surélevée à la structure de support (12), chacun desdits chariots (14', 14") supportant une tête d'usinage respective (22', 22") qui peut se déplacer le long d'un axe de translation transversal respectif (Y', Y") et le long d'un axe de translation vertical respectif (Z', Z") au moyen de moyens de guidage respectifs (18', 18", 20', 20", 24', 24"), chacune desdites têtes d'usinage (22', 22") supportant une broche porte-outil respective (28', 28") disposée avec un axe vertical, ledit centre d'usinage (10) comprenant en outre au moins une table de support de pièce (34', 34") supportée au niveau d'une base (30', 30") de ladite structure de support (12) de manière rotative autour d'un premier axe de rotation (Yr', Yr") qui s'étend dans une direction horizontale et transversale, et autour d'un second axe de rotation (Hr', Hr"), qui est perpendiculaire au premier, et deux magasins d'outils mécanisés (36', 36") supportés aux extrémités longitudinales opposées de ladite structure de support (12) de manière à être accessibles par chacune desdites broches (28', 28"), lesdits moyens de guidage comprenant, pour chacun desdits chariots (14, 14"), un coulisseau (18', 18") pouvant coulisser le long d'un guide horizontal respectif (20', 20") qui est solidaire du chariot (14', 14") et s'étend dans une direction transversale, et, pour chacun desdits coulisseaux (18', 18"), un guide vertical (24', 24") qui est solidaire du coulisseau (18', 18") et est engagé de manière coulissante par l'une respective des têtes d'usinage (22', 22"), chacun desdits magasins d'outils (36', 36") comprenant un tambour rotatif de support d'outils (38', 38") qui est agencé de telle sorte que son axe est horizontal et transversal et supporte périphériquement une pluralité d'outils (40', 40").

2. Centre d'usinage (10) selon la revendication 1, **caractérisé en ce qu'**il comprend deux desdites tables de support de pièce (34', 34") dans des positions longitudinales symétriques.

3. Centre d'usinage (10) selon la revendication 1 ou 2, **caractérisé en ce que** ladite au moins une table de maintien de pièce (34', 34") est disposée le long de l'axe central dudit centre d'usinage (10).

4. Centre d'usinage (10) selon une ou plusieurs des revendications 1 à 3, **caractérisé en ce que** ladite structure de support (12) comporte une base qui comprend au moins une goulotte (30', 30") qui débouche dans une zone d'évacuation des copeaux (32).

5. Centre d'usinage (10) selon la revendication 4, **caractérisé en ce que** ladite base comprend deux goulottes longitudinalement opposées (30', 30") qui débouchent dans une zone centrale d'évacuation des copeaux (32).

6. Centre d'usinage (10) selon la revendication 1, **caractérisé en ce que** chacun desdits magasins d'outils (36', 36") est muni d'un écran (42', 42") qui est adapté pour protéger, pendant l'usinage, le magasin d'outils respectif (36', 36") des copeaux d'usinage.

7. Centre d'usinage (10) selon la revendication 6, **caractérisé en ce que** ledit écran (42', 42") est fixé au tambour porte-outils respectif (38', 38").
